# EUROPÄISCHE PATENTSCHRIFT

(11) **EP 1 771 969 B1**
(45) Veröffentlichungstag und Bekanntmachung des Hinweises auf die Patenterteilung: **21.11.2007**
(21) Anmeldenummer: 05763674.8
(22) Anmeldetag: 23.07.2005
(51) Int. Cl.: H04L 12/24

(54) **SYSTEM ZUR ZENTRALEN PLANUNG UND DOKUMENTATION VON E1-/LWL-NETZWERKEN**
SYSTEM FOR CENTRALLY PLANNING AND DOCUMENTING E1/FIBER OPTIC NETWORKS
SYSTEME POUR LA PLANIFICATION CENTRALE ET LA DOCUMENTATION DE RESEAUX E1-/A FIBRES OPTIQUES

(30) Priorität: 27.07.2004 DE 102004036337
(43) Veröffentlichungstag der Anmeldung: 11.04.2007
(73) Patentinhaber: T-Mobile Deutschland GmbH, 53227 Bonn (DE)
(72) Erfinder: BURGGRAF, Reiner, 53844 Troisdorf (DE); SPICKER, Karsten, 53844 Troisdorf (DE)
(74) Vertreter: Riebling, Peter
(86) Internationale Anmeldenummer: PCT/EP2005/008050
(87) Internationale Veröffentlichungsnummer: WO 2006/010573

(56) Entgegenhaltungen:
- EP-A- 1 225 525
- US-A1- 2003 093 426
- US-A1- 2003 169 765

## Beschreibung

Die Erfindung betrifft ein System zur zentralen Planung und Dokumentation von E1-/ LWL-Netzwerken, wie sie in Unternehmen der Telekommunikationsbranche eingesetzt werden.

Bisher erfolgte bei E1- bzw. LWL-Netzwerken (2Mbit/s Datenübertragungsnetze und Lichtwellenleiter-Netzwerke) eine Planung der Verschaltungen der einzelnen Komponenten stets vor Ort. Dadurch war eine zeitsparende Vorabplanung nicht möglich. Die Dokumentation erfolgte bei unterschiedlichen Nutzern jeweils in eigenen Listen. Die Synchronisation dieser Listen, sofern dies überhaupt erfolgte, erforderte eine große Menge an Ressourcen. Dadurch war die Dokumentation der Netzwerkverschaltung nie aktuell und konnte nicht für die Planung eingesetzt werden.

Die US 2003/0169765 A1 offenbart ein Verfahren zur Konfigurierung von benutzerspezifischen Verbindungen zwischen benutzerseitigen Netzwerkgeräten und Zugangsknoten von Kommunikationsnetzwerken. Die benutzerspezifische Verbindung wird anhand von Planungsdaten konfiguriert, die auf Basis von vorgegebenen Kriterien aus Netzwerkdaten ermittelt werden. Die Netzwerkdaten enthalten Daten über verfügbare Netzelemente und deren Verbindungen.

Die Aufgabe der Erfindung besteht darin, ein zentrales System zu schaffen, das sowohl die Netzplanung als auch Dokumentation von E1-/ LWL-Netzwerken übernimmt beziehungsweise vereinfacht.

Diese Aufgabe wird erfindungsgemäß durch das System gemäß den Merkmalen des Anspruchs 1 gelöst.

Bevorzugte Ausgestaltungen und vorteilhafte Merkmale der Erfindung sind in den abhängigen Ansprüchen angegeben.

Das erfindungsgemäße System umfasst eine Client-Server Anwendung basierend auf MS SQL-Server, MS Access als Frontend und MS Office Programmen und übernimmt die Aufgaben eines zentralen Planungs- und Dokumentationswerkzeuges von E1-/LWL-Netzen. Des weiteren ermöglicht es das System, Arbeitsvorgänge abzubilden und an die zuständigen Stellen weiter zu leiten (Workflow). Dadurch wird ein ordentliches Verwalten und Warten der Netze garantiert. Eine Integrität der Verbindungsdaten wird hergestellt.

Die wesentlichen Merkmale des erfindungsgemäßen Systems sind:
- Abbilden, Planen und Dokumentieren der Netzinfrastruktur eines optischen Netzwerks (2Mbit/ Lichtwellenleiter (E1-/LWL). Das beinhaltet sowohl die komplette Verteilertechnik (Räume, Racks, Chassis, Ports) sowie die angeschlossenen Netzelemente (Schnittstellen, Funktion und Portbelegung)
- Automatisches Planen und Abbilden sowie Statusverfolgung von Arbeitsabläufen (Workflows)
- Abbilden/Planen und Dokumentation von Stammverkabelung zwischen den einzelnen Verteilern (hier VBK)
- Abbilden, Planen und Dokumentieren von Beschaltungen (Patchen/ Fix-Wire) der Netzelemente untereinander
- Statistische Auswertung (Reports) z.B. Auslastung der bestehenden Ressourcen.
- Signalverfolgung über das gesamte Netzwerk von jeder beliebigen Verbindung. Z.B. Verbindung zwischen zwei Netzelementen, Signale von Verstärkereinheiten Bridging Office Repeatern (BOR), Signalverfolgung über optische Splitter hinweg
- Datenexport/Import nach z.B. Microsoft® Excel
- Druckassistent zum Erstellen von Kabel-, Verteiler- und Netzelementbeschriftungen

Das erfindungsgemäße System berücksichtigt die unterschiedlichen Anforderungen / Blickwinkel der verschiedenen Nutzer einer Netzinfrastruktur. Die wesentlichen Nutzer des Werkzeuges sind Pflege- und Wartungspersonal der Infrastruktur, Betreiber von Mobilfunktechnik, Tester von Mobilfunktechnik und Montagekräfte.

Aufgrund von unterschiedlichen Anforderungen der Benutzer an das System sind für die unterschiedlichen Benutzer(gruppen) folgende Funktionen vorgesehen:
Infrastrukturmanagement
   - Jederzeit aktuelle Übersicht über freie und belegte Ressourcen
   - Pflege und Wartung des Netzes
   - Planung und Einbindung zusätzlicher Ressourcen in die Netze (VBK)
Betreiber
   - Einbindung von (neuen) Netzelementen in eine vorhandene Infrastruktur
   - Schaffen von Verbindungen (Patchen)
   - Übersicht über vorhandene Ressourcen und Verbindungen (Patches) sowie freie Verbindungen
   - Übersicht darüber, welche Signale über welche Verbindungen laufen
Tester
   - Information über bestehende Verbindungen
Montagekräfte
   - Arbeiten nach genauer Anweisung durch Arbeitsaufträge

Die Vorteile und der Nutzen des erfindungsgemäßen Systems für den Anwender sind wie folgt:
- Integrität der Daten
- immer aktuelle Anlagendokumentation
- Repräsentatives Abbild der Testanlage; saubere Struktur
- schnelle Statusinformation möglich
- Hohe Präzision beim Netzsupport
- vereinfachte Fehlersuche
- Hohe Geschwindigkeit bei Anfragen von Supportleistung
- Kosteneinsparung durch effizientere Nutzung der vorhandenen Ressourcen (Material- und Human-Ressource)

Ein Ausführungsbeispiel der Erfindung wird nun anhand der Zeichnungen näher erläutert.
Figur 1 zeigt eine typische Beschaltung von Netzelementen bei einem Betreiber eines Kommunikationsnetzes;
Figur 2 zeigt eine Übersicht über die wichtigsten Funktionen des erfindungsgemäßen Systems;
Figur 3 ist eine Darstellung der Bildschirmmaske für die zentrale Bearbeitung von E1 Patches;
Figur 4 ist eine Darstellung der Bildschirmmaske für die zentrale Bearbeitung von LWL Patches;
Figur 5 ist eine Darstellung der Bildschirmmaske für ein E1 Monitoring;
Figur 6 ist eine Darstellung der Bildschirmmaske für ein LWL Monitoring;
Figur 7 ist eine Darstellung der Bildschirmmaske für einen Signal Trace Report;
Figur 8 ist eine Darstellung der Bildschirmmaske für eine Geräteinformation;
Figur 9 ist eine Darstellung der Bildschirmmaske für einen Gerätereport;
Figur 10 ist eine Darstellung der Bildschirmmaske für eine Rauminformation in Bezug auf vorhandene Ports;
Figur 11 ist eine Darstellung der Bildschirmmaske für eine Rauminformation in Bezug auf vorhandene Geräte;
Figur 12 ist eine Darstellung der Bildschirmmaske für einen Report über die Auslastung des Netzes;
Figur 13 ist eine Darstellung eines Ausdrucks eines Labels zur Kabelbeschriftung;
Figur 14 ist eine Darstellung eines Ausdrucks einer Patchliste;
Figur 15 ist eine Darstellung eines Ausdrucks einer Verteilerbeschriftung bei E1;
Figur 16 ist eine Darstellung eines Ausdrucks eines Labels zur Kabelbeschriftung bei LWL;
Figur 17 ist eine Darstellung der Bildschirmmaske für ein Formular Fix Wire Workflow;
Figur 18 ist eine Darstellung der Bildschirmmaske für ein Formular Arbeitsanweisung;

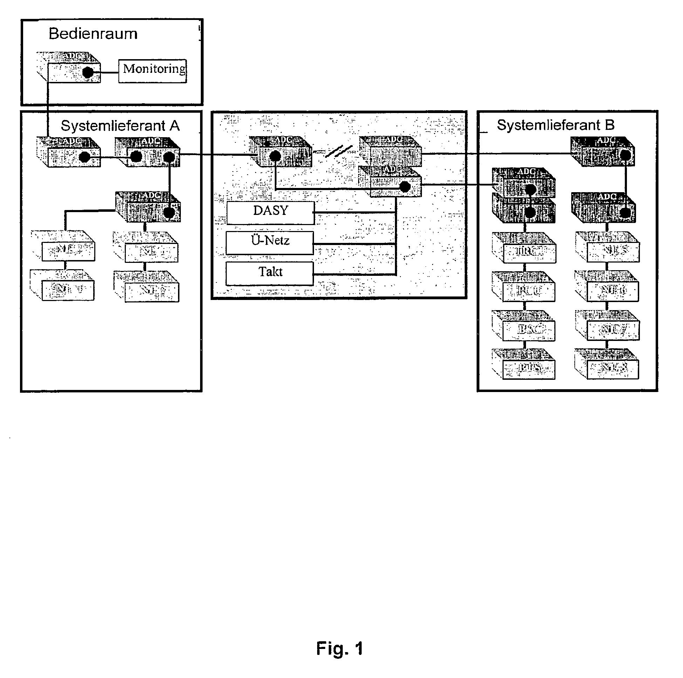

Figur 1 gibt einen Überblick über eine typische Beschaltung von Netzelementen bei einem Telekommunikationsanbieter bzw. -betreiber. Die Netzelemente von (unterschiedlichen) Systemlieferanten werden über Verteilerelemente miteinander verbunden. Die dargestellten Verknüpfungen zwischen den Verteilern und den einzelnen Komponenten lassen sich mit dem erfindungsgemäßen System nachbilden. Somit wird ein ordentlicher Support gewährleistet und dokumentiert.

### Übersicht der Funktionen des Systems

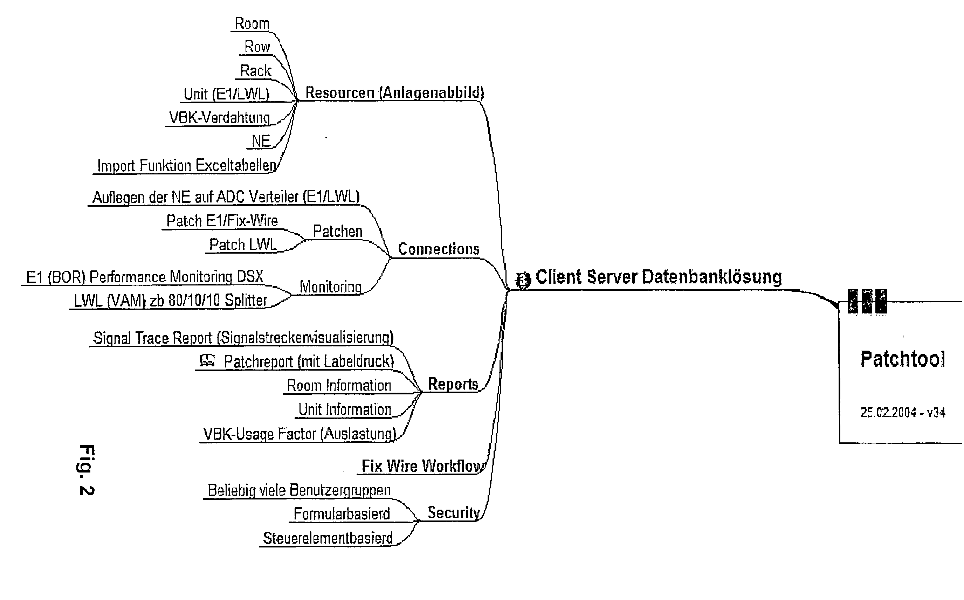

In Figur 2 sind die wesentlichen Funktionen des erfindungsgemäßen Systems dargestellt.

Es ist mindestens eine Datenbasis vorhanden, in welcher Angaben zur Lokalisierung der Verteiler und Netzelemente gespeichert sind, insbesondere der Raum, die Reihe, das Rack und die Einheit der Installation, Angaben zur Verdrahtung, zu den Netzelementen und Import-/Export-Funktionen.

Des weiteren sind in der Datenbasis Angaben über die Verbindungen ("Connections") abgelegt, insbesondere die einem Verteiler zugeordneten Netzelemente (NE), die Art und Weise der Verbindungen und Angaben zum Monitoring.

Es ist eine Datenverarbeitungseinrichtung vorgesehen, die in der Datenbasis vorhandenen Daten in Beziehung zueinander setzt und eine Auswertung der Daten "Reporting" durchführt. Insbesondere lassen sich bei der Auswertung der Daten eine Signalstreckenvisualisierung, ein Verbindungsreport (Patchreport), eine Information über die in einem Raum befindlichen Installationen, Informationen über die Geräte sowie die Auslastung der Geräte gewinnen.

Es lässt sich der Arbeitsfluss der Festverdrahtungen / Festrangierungen (Fixed wire Workflow) darstellen.

Die Nutzung des Systems kann durch beliebig viele Benutzer bzw. Benutzergruppen erfolgen. Die Zugriffssteuerung und das Sicherheitsmanagement kann formularbasierend oder steuerelementbasierend erfolgen.

### Funktionsbeschreibung

Mittels des erfindungsgemäßen Systems als CAE Werkzeug ist es möglich ein Anlagenabbild der vorhandenen Netzinfrastruktur nachzubilden. Dadurch bedingt hat man die Möglichkeit sehr heterogene Verbindungen von der Quelle bis zum Ziel zu verwalten. Diese Verwaltung lässt dann wiederum Reports zu, welche für einen ordentlichen Support eines Netzes notwendig sind. Des weiteren kann das System als Planungswerkzeug, als Dokumentationswerkzeug und als Workflow-System genutzt werden.

Das Anwendungsdesign ist wie folgt aufgebaut:
- Die Auswahl der Intallations-Räume; Racks; Einheiten (Units) und Netzelemente erfolgt über Comboboxen
- Die aktuell in einer Reihe (Row) vorhandenen Racks bzw. Units werden in einer Übersichtsliste angezeigt und können zur Bearbeitung ausgewählt werden
- Besonderes Feature der Units und Netzelemente: Die Anzahl Ports kann nachträglich erweitert werden. Alle notwendigen Port- und Signalressourcen werden von der Applikation automatisch generiert und zur weiteren Verarbeitung zur Verfügung gestellt.
- Das System liefert Informationen über Datum / den "erstellenden" Benutzergeneriert und Datum / Änderungen durch Benutzer
- Sicherheitsfunktion: Elemente denen nichts mehr zugeordnet ist, können aus dem System gelöscht werden
- Ein Datenimport aus Excel- bzw. CSV-Files möglich

### Ressourcen

Die Funktionalität Ressourcen beinhaltet das Anlegen/Verwalten der gesamten Netzinfrastruktur. Folgende Daten lassen sich abbilden:
- Raum: Name, Benutzer, Beschreibung
- Reihen: Name; Benutzer; Beschreibung
- Rack: Name; Beschreibung,
- Verteilereinheit: Typ; Name; Rack-Lokation; Beschreibung
- Netzelement: Typ; Name; Anzahl der Ports; Beschreibung

### Verbindungen (Connections)

Die Funktionalität Verbindungen (Connections) beinhaltet das Verbinden der angelegten Ressourcen. Die wesentlichen Connections sind:
- Verbindungskabel Einheit Verbindung (VBK Unit Connect) Massen VBK Connect und VBK Disconnect von Verteilern (E1 und LWL). Auswahl von Port zu Port auf der Quelleinheit (Source Unit).
   Die ordnungsgemäße Beschaltung wird in einem Connection Report protokolliert.
   Disconnect erfolgt analog.
   Sicherheitsfunktion: vor dem Lösen einer Beschaltung wird geprüft, ob der zu lösende Port "frei" ist, d.h. weder Patch noch Fix wire seitig verdrahtet ist. In diesem Fall erfolgt eine Fehlermeldung im Connection Report.
- Netzelementverbindung (NE CONNECT)
   Aufschalten und Lösen der Verbindungen zwischen Netzelementen (E1 und LWL) auf Verteilern.
   Besonderes Feature: Nach Auswahl eines NE Ports und eines Unit Ports erfolgt nach dem verbinden automatisch die Positionierung auf die nächsten (freien) Ports. Dies erspart Zeit beim Massenverbinden

### Patch E1/LWL, Fix-Wire

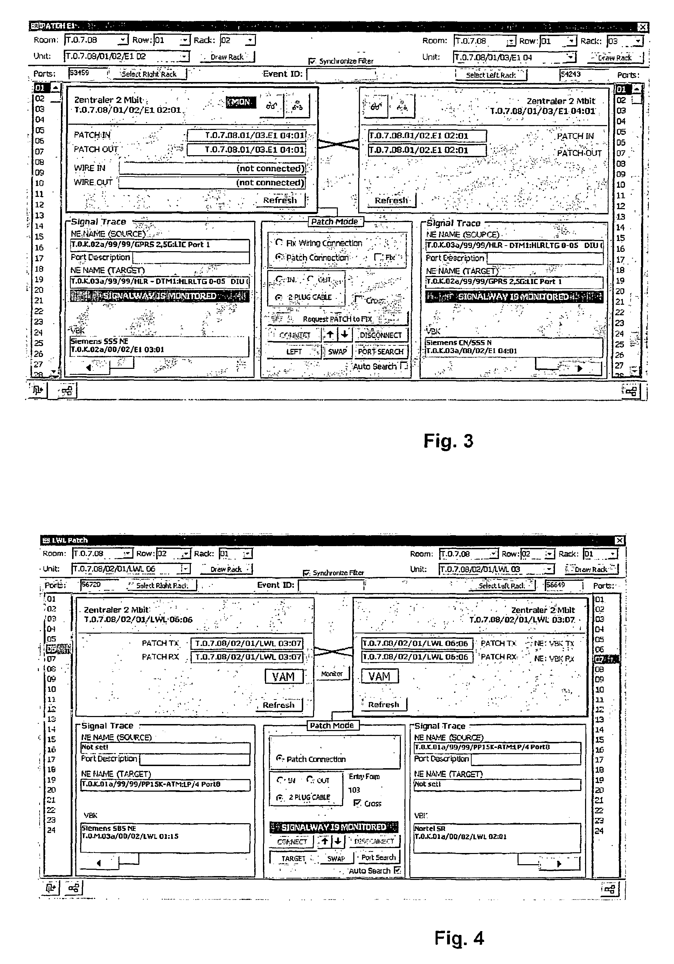

Die Zentrale Bearbeitungsmaske zum Verbinden und Lösen von Patch- und FixWire Verbindungen ist in den Figuren 3 und 4 dargestellt.
In Fenstern auf der linken und rechten Seite der Bildschirmmaske können zwei zu verbindende Ports gegenübergestellt werden. Dies geschieht durch Betätigen der Auswahlboxen auf beiden Seiten. Die Verbindungsart wird in einem Fenster in der Mitte der Bildschirmmaske im Bereich "PATCH MODE" vorgegeben. Zur Verfügung stehen aktuell Patch/FixWire in der Kombination Cross/NotCross.

### Abbildung Patch/Fix-Wire für E1:

Die Funktionalität der Verteilereinheiten (z.B. Type "E1 64_3HE") erlaubt es, fixe Verbindungen (fix wire oder Festrangierung genannt) durch gepatchte Verbindungen (Patchkabel) temporär aufzuheben. Die Signalverfolgung im System berücksichtigt diese Schaltlogik. Sowohl Patch als auch fixe Verbindungen werden in der Patchmaske verwaltet. Sind sowohl Patch als auch Fixed Connection geschaltet, so erfolgt die automatische Signalverfolgung (SIGNALTRACE) nur über die Patch connection (Patch ist aktiv). Wird das Patchkabel gelöst, so erfolgt die Signalverfolgung wieder über die fixed connection (fix ist aktiv).

### SIGNAL TRACE REPORT

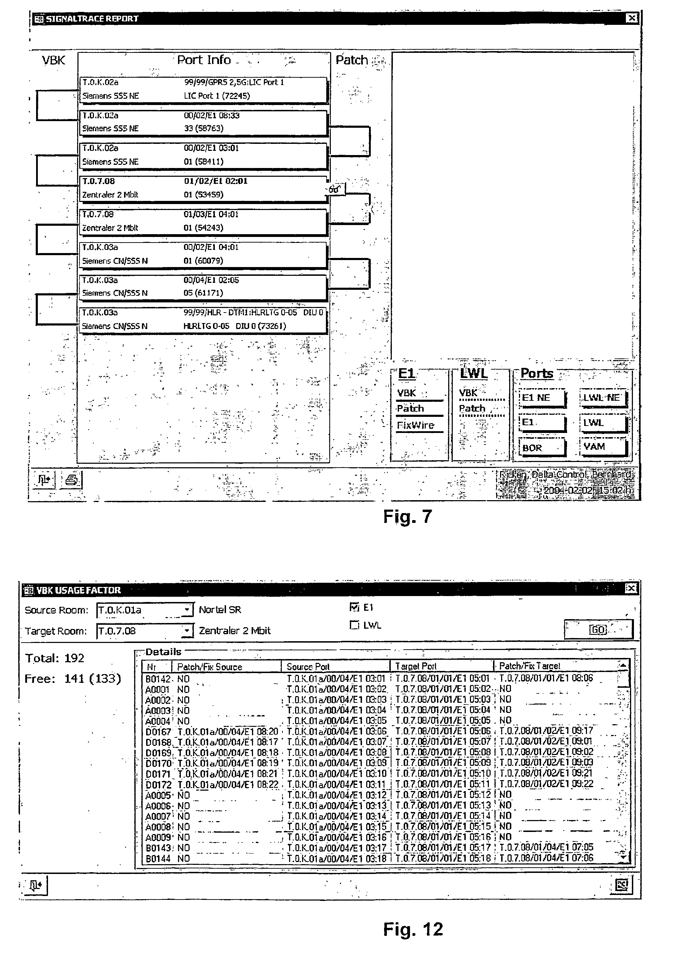

Die Applikation analysiert zu jeder Zeit den kompletten Verlauf der Signalstrecke, des jeweils selektierten Ports. Über entsprechende Schaltflächen der Bildschirmmaske "SIGNAL TRACE " erfolgt eine graphische Ausgabe der gesamten Signalstrecke, wie es in Figur 7 dargestellt ist.

Ein besonderer Bedienkomfort besteht durch Programmierung verschiedener Funktionen. So kann zum Beispiel durch eine "PLAY" Schaltfläche die Signalstrecke von Port zu Port durchlaufen werden. Alle Einstellungen werden dann durch die Applikation selbständig durchgeführt.

Die Checkbox AUTOSEARCH in der Eingabemaske "Patch Mode" bietet die Möglichkeit, bei Auswahl eines Ports auf einer der beiden Bildschirmseiten, den damit verbundenen Gegenport automatisch einstellen zu lassen.

Die Schaltflächen "SELECT RIGHT RACK" und "SELECT LEFT RACK" gestatten es, per Mausklick die jeweilig andere Bildschirmseite auf das gleich Rack zu positionieren. Von dieser Maske ausgehend können auch Monitorsignale (BOR) beschaltet und deren Ausgangssignale auf weitere E1 Strecken gelegt werden (siehe E1 Monitoring).

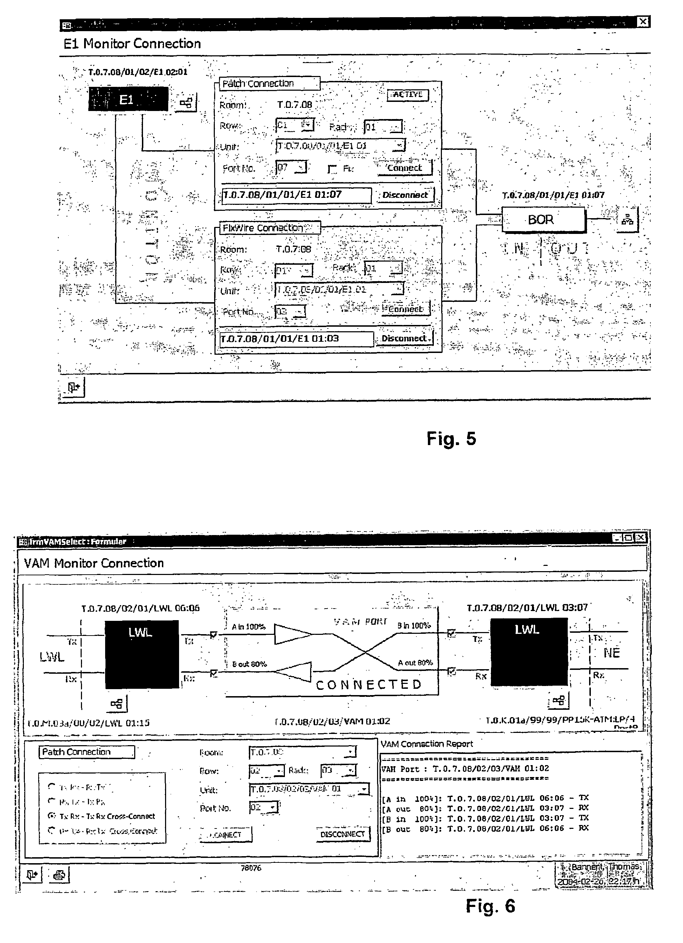

Die in Figur 5 gezeigte Funktion "E1 MONITOR Connection" ermöglicht eine Signalverfolgung über Verstärkereinheiten.

Die in Figur 6 dargestellte Funktion "LWL MONITOR Connection (VAM)" ermöglicht eine Signalverfolgung über Monitorabgriff optische Splitter hinweg.

Im Rahmen der Datenverarbeitung sind folgende Reports möglich:

### SIGNAL TRACE REPORT

Dieser Report ermöglicht jederzeit eine Signalverfolgung von der Quelle bis zum Ziel. Monitorsignale (Signalabgriffe) werden ebenfalls dargestellt. Ein Beispiel eines solchen Reports ist in Figur 7 dargestellt.

### UNIT INFORMATION

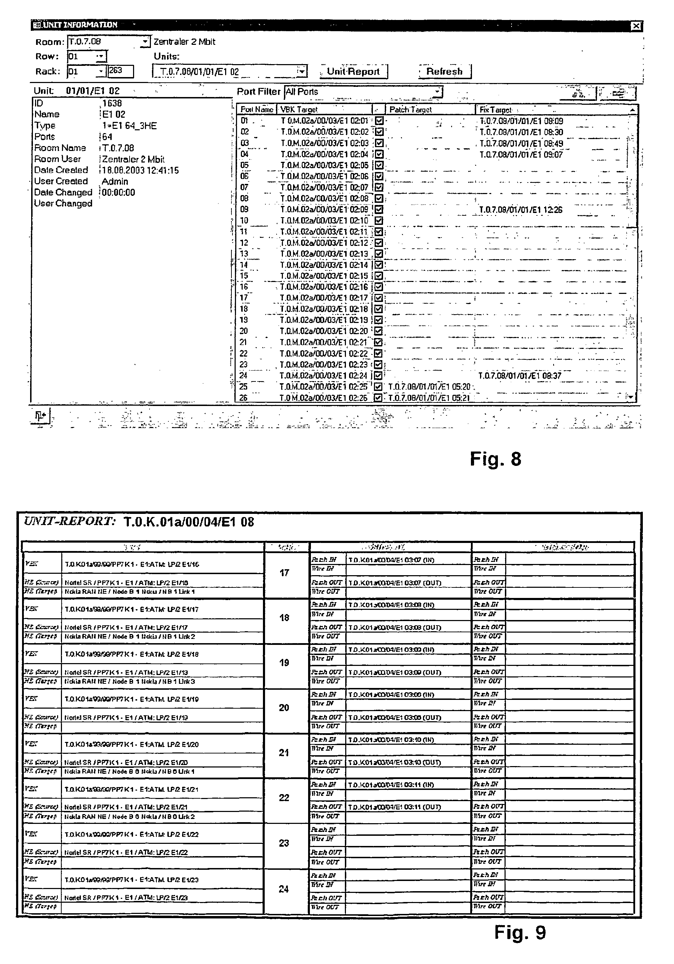

Die allgemeine Bildschirmmaske für eine Geräteinformation ist in Figur 8 dargestellt.
Über eine Schaltfläche "Unit Report" gelangt man zu genauen Informationen über den Status einer ausgewählten Einheit (Unit). Ein Beispiel eines solchen Unit Reports ist in Figur 9 dargestellt.

### ROOM INFORMATION

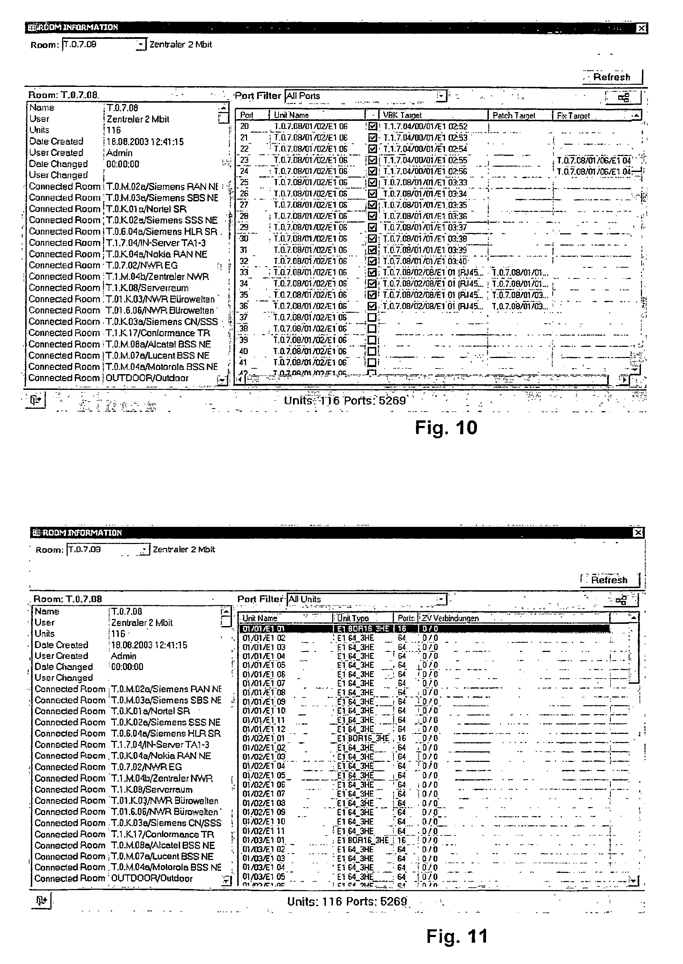

Dieser Report gibt genaue Information über den Status eines ausgewählten Raums. Figur 10 zeigt ein Beispiel für die Information über alle in einem Raum vorhandenen Ports. Figur 11 zeigt ein Beispiel für die Information über alle in einem Raum installierten Geräteeinheiten.

### VBK USAGE FACTOR (Auslastungsanzeige Belegung Verbindungskabel)

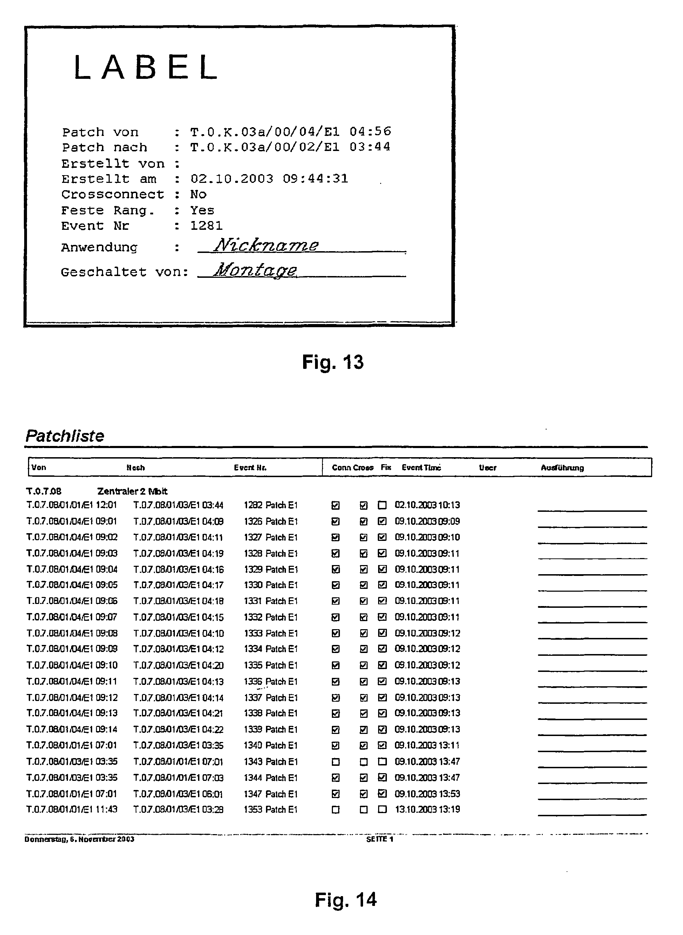

Dieser Report gibt genaue Information über die Auslastung des Netzes (jeweils Auslastung von Raum zu Raum):
Folgende Größen werden angezeigt:
   - Total = Anzahl verfügbarer Ressourcen (Verbindungskabel)
   - Free = Anzahl Brutto (Anzahl netto): Anzahl Brutto verfügbarer Leitungen die von Source Room aus nicht belegt sind bzw. Anzahl netto verfügbarer Leitungen, Anzahl Ports die in beiden Räumen nicht durch Patch oder Fixed connection belegt sind.
Ein Beispiel eines solchen Reports ist in Figur 12 dargestellt
Die Daten können in andere Softwareanwendungen übernommen werden.

### Patchreport (Patchkabelbeschriftung/Patchanweisung)

Dieser Report gibt genaue Information über die geplanten und damit auszuführenden Patches. Außerdem werden Labels zur Kabelbeschriftung ausgedruckt.
Figur 13 zeigt ein Beispiel für den Ausdruck eines Labels zum Anbringen an einer Verbindungsleitung.
Figur 14 zeigt ein Beispiel für einen Ausdruck einer Patchliste.

### Verteilerbeschriftung E1/LWL

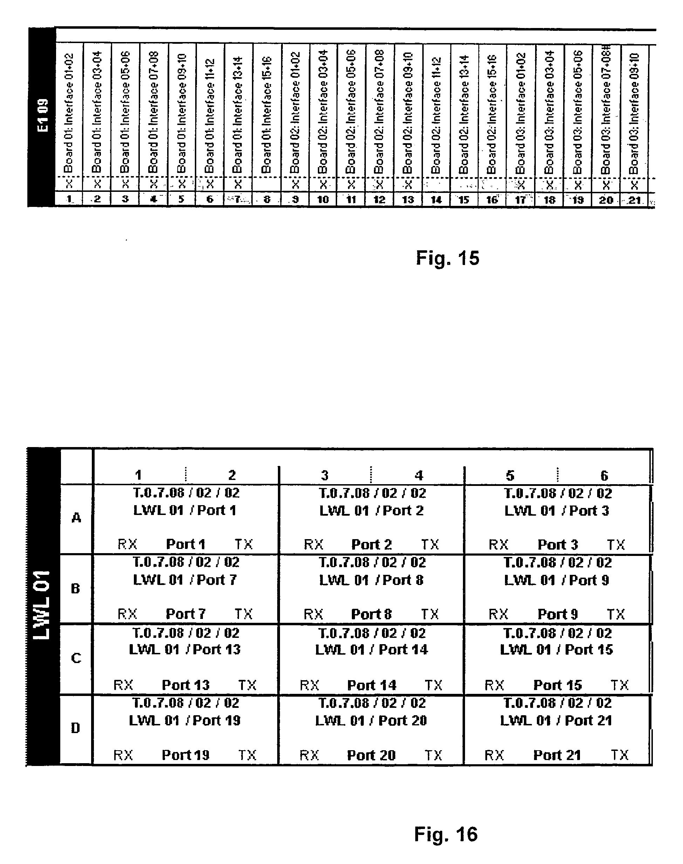

Dieser Report gibt Information über die Belegung der einzelnen Ports einer Geräteeinheit. Die Ausgabe dient zur Beschriftung der Verteiler-Einheiten vor Ort. Beispiele für Beschriftungsausdrucke sind in den Figuren 15 und 16 dargestellt.

### Fix Wire Workflow

Die Funktionalität Fix Wire Arbeitsfluss (Workflow) beinhaltet die Workflow-Anwendung zur Beauftragung und Koordination der Fix Wire Verbindungen durch z.B: Montageteams.

Zur jeder Fix Wire Verbindung wird ein jeweils entsprechender Status verwaltet:

**Erstellen ein Festrangierung:**

| Status der Fix connection | auslösende Benutzergruppe des Event | Aktion | Titel in Arbeitsauftrag an Montage |
|---|---|---|---|
| Fix requested | Betreiber oder Infrastruktur-management | Montageauftrag zum Einziehen der Verbindung als Festrangierung (wire-wrap) soll erteilt werden | |
| Fix in work | Infrastruktur-management | (Gebündelter) Auftrag an Montage wurde erteilt (Arbeitsauftrag in Form von Liste) | Conn *(siehe Fig. 18)* |
| Fix done | Infrastruktur-management | Erledigung des Arbeitsauftrages wurde von Montage bestätigt, die Patchverbindung wird gelöst und nur noch als Festrangierung im Tool eingetragen. | |

**-Entfernen ein Festrangierung:**

| Status der Fix connection | auslösende Benutzergruppe des Event | Aktion | Titel in Arbeitsauftrag an Montage |
|---|---|---|---|
| Unwrap requested | Betreiber oder Infrastruktur-management | Montageauftrag zum entfernen der Festrangierung (wire-wrap) soll erteilt werden | |
| Unwrad in work | Infrastruktur-management | (Gebündelter) Auftrag an Montage wurde erteilt (Arbeitsauftrag in Form von Liste) | Disk *(siehe Figur 18)* |
| *alternativ:* Proofe requested | Betreiber oder Infrastruktur-management | Die Festrangierung wurde (angeblich) vom Betreiber selber entfernt. Es wird ein Auftrag zum prüfen erteilt ob diese Festrangierung auch ordnungsgemäß entfernt wurde (z.B. keine offenen Leitungsenden) | Proof *(siehe Figur 18)* |
| *alternativ:* Proof in work | Infrastruktur-management | (Gebündelter) Auftrag an Montage wurde erteilt (Arbeitsauftrag in Form von Liste) | |
| unwrap/proof done | Infrastruktur-management | Erledigung des Arbeitsauftrages wurde von Montage bestätigt, die Festrangierung wird aus dem Patchtool entfernt | |

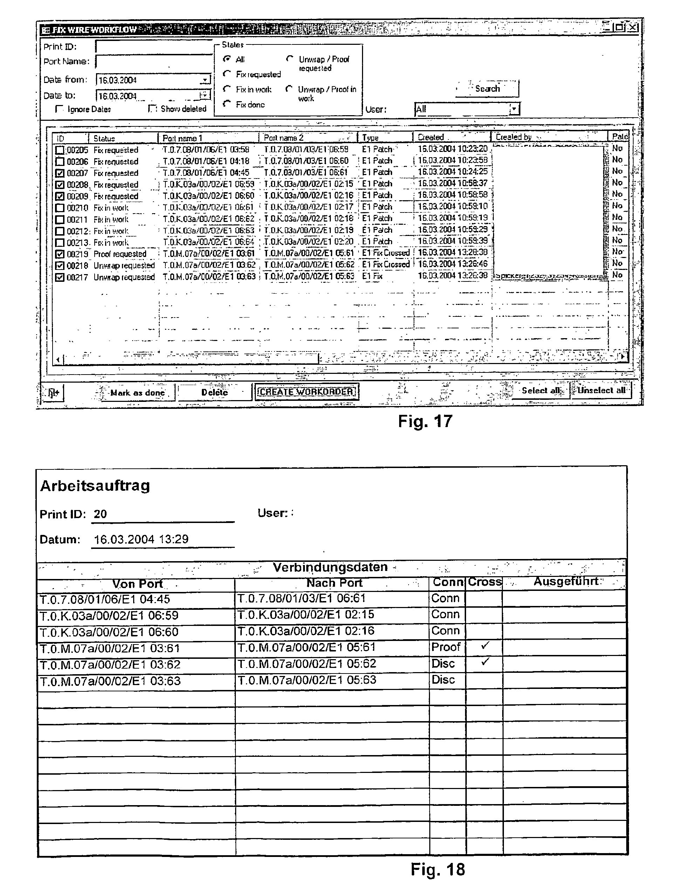

Figur 18 zeigt ein Beispiel für ein Formular "FIX WIRE WORKFLOW" zur Erstellung einer Festrangierung.

Figur 19 zeigt ein Beispiel für eine Arbeitsanweisung zum Erstellen oder Entfernen einer Festrangierung.

### Sicherheitsfunktion (Security)

Die Security Funktion beinhaltet, dass sich verschiedene Benutzer mit unterschiedlichen Rechten und unterschiedlichen Sichten in das System einloggen können. Folgende Funktionen sind möglich.
Beliebig viele Benutzergruppen
Formularbasiert
Steuerelementbasiert

## Patentansprüche

1. System zur zentralen Planung und Dokumentation von E1-/Lichtwellenleiter-Netzwerken, welches umfasst:
eine Datenbasis mit Mitteln
zum Erfassen von Daten über die ortsbezogene Struktur der Komponenten des Netzwerks, zum Erfassen der technischen Daten der Verteilereinheiten und Netzelemente und zum Erfassen der Daten über Verdrahtungs- und Patchmöglichkeiten, und zur Verwaltung von Kabellisten;
eine Datenverarbeitungseinrichtung mit Mitteln
zur Verarbeitung der in der Datenbasis vorhandenen Daten, wobei die Daten derart in Beziehung zueinander gesetzt werden, dass eine Auswertung der Daten hinsichtlich einer Information über die in einem Raum befindlichen Installationen, Informationen über die Geräte sowie der Auslastung der Geräte, einer Signalstreckenvisualisierung, und eines Verbindungsreports (Patchreport) durchführbar sind,
Mittel zum automatischen Abbilden, Planen und Dokumentieren von Stammverkabelungen zwischen den einzelnen Verteilern,
Mittel zum automatischen Abbilden, Planen und Dokumentieren von Beschaltungen der Netzelemente untereinander,
Mittel zur Signalverfolgung über das gesamte Netzwerk von jeder beliebigen Verbindung, wobei die Signalverfolgung unter Berücksichtigung der jeweiligen Schaltlogik erfolgt, und
Mittel zur visuellen Darstellung der Daten.

2. System nach Anspruch 1, **dadurch gekennzeichnet, dass** Informationen über die Basisverkabelung (VBK), Patchverkabelung, das Einpflegen Zusatzinformationen und Suchfunktionen abrufbar sind.

3. System nach einem der vorhergehenden Ansprüche, **dadurch gekennzeichnet, dass** Dökumentationen über Einzelsignale (tabellarisch); ressourcenbezogene Dokumentationen, Arbeitsanweisungen, Labeldruck und eine Auswertung der Patchverkabelung abrufbar sind.

4. System nach einem der vorhergehenden Ansprüche, **dadurch gekennzeichnet, dass** die ortsbezogene Struktur der Komponenten die Etage, den Raum, das Rack, die Unit, und den Port der installierten Komponenten beschreibt.

5. System nach einem der vorhergehenden Ansprüche, **dadurch gekennzeichnet, dass** Mittel zum automatischen Planen und Abbilden sowie Statusverfolgung von Arbeitsabläufen vorgesehen sind.

6. System nach einem der vorhergehenden Ansprüche, **dadurch gekennzeichnet, dass** Mittel für eine statistische Auswertung der bestehenden Ressourcen vorgesehen sind.

7. System nach einem der vorhergehenden Ansprüche, **dadurch gekennzeichnet, dass** Mittel für einen Datenexport/-import der Daten zu/von anderen Anwendungen eingerichtet sind.

8. System nach einem der vorhergehenden Ansprüche, **dadurch gekennzeichnet, dass** Mittel zum Erstellen und Drucken von Kabel-, Verteiler- und Netzelementbeschriftungen vorgesehen sind.

## Claims

1. System for the central planning and documentation of E1 fibre optic networks, which includes:
a database having means
for collecting data through the local structure of the components of the network, for collecting the technical data of the distributor units and network elements and for collecting the data through wiring and patch facilities, and for the management of cable lists;
a data processing device having means
for processing the data present in the database, the data being related to each other in such a way that evaluation of the data can be carried out regarding information on the installations located in a space, information on the equipment and the capacity utilisation of the equipment, a signalling route display, and a patch report,
means for automatically imaging, planning and
documenting trunk cabling between the individual distributors,
means for automatically imaging, planning and documenting wiring of the network elements to each other,
means for signal tracing through the whole network of any connection, signal tracing being effected with consideration of the respective switching logic, and means for visual display of the data.

2. System according to claim 1, **characterised in that** information on the basic cabling (VBK), patch cabling, the entry of additional information and search functions is retrievable.

3. System according to one of the preceding claims, **characterised in that** documentation on individual signals (in table form), resource-related documentation, work instructions, label printing and evaluation of the patch cabling is retrievable.

4. System according to one of the preceding claims, **characterised in that** the local structure of the components describes the floor, the room, the rack, the unit and the port of installed components.

5. System according to one of the preceding claims, **characterised in that** means are provided for automatic planning and imaging as well as status tracing of work procedures.

6. System according to one of the preceding claims, **characterised in that** means are provided for statistical evaluation of the existing resources.

7. System according to one of the preceding claims, **characterised in that** means are designed for data export/import of the data to/from other applications.

8. System according to one of the preceding claims, **characterised in that** means are provided for producing and printing cable, distributor and network element inscriptions.

## Revendications

1. Système pour la planification et la documentation centrales de réseaux E1/à fibres optiques, qui comprend :
une base de données avec des moyens
pour enregistrer des données sur la structure de localisation des composants du réseau, pour enregistrer les données techniques des unités de répartition et des éléments de réseau, et pour enregistrer les données sur les possibilités de câblage et de raccordement, et pour gérer des listes de câbles ;
un dispositif informatique avec des moyens
pour traiter les données contenues dans la base de données, les données étant mises en relation entre elles de telle sorte qu'une analyse des données puisse être effectuée en ce qui concerne une information concernant les installations situées dans un espace, des informations concernant les appareils et l'utilisation des appareils, une visualisation de trace de signal, et un rapport de raccordement,
des moyens pour représenter, planifier et documenter automatiquement des câblages de base entre les répartiteurs individuels,
des moyens pour représenter, planifier et documenter automatiquement les câblages des éléments de réseau entre eux,
des moyens pour suivre les signaux sur tout le réseau de n'importe quelle connexion, et ce en tenant compte du système logique de commutation correspondant, et
des moyens pour présenter visuellement les données.

2. Système selon la revendication 1, **caractérisé en ce que** des informations sur le câblage de base et le câblage de raccordement peuvent être appelées grâce à l'insertion d'informations supplémentaires et de fonctions de recherche.

3. Système selon l'une des revendications précédentes, **caractérisé en ce que** des documentations sur des signaux individuels (sous forme de tableau), des documentations portant sur les ressources, des instructions de travail, une impression de libellé et une analyse du câblage de raccordement peuvent être appelées.

4. Système selon l'une des revendications précédentes, **caractérisé en ce que** la structure de localisation des composants décrit l'étage, l'espace, le bâti, l'unité et l'accès des composants installés.

5. Système selon l'une des revendications précédentes, **caractérisé en ce qu'**il est prévu des moyens pour la planification, la représentation et le suivi d'état automatiques d'opérations.

6. Système selon l'une des revendications précédentes, **caractérisé en ce qu'**il est prévu des moyens pour une analyse statistique des ressources existantes.

7. Système selon l'une des revendications précédentes, **caractérisé en ce que** des moyens pour une exportation/importation des données vers/à partir d'autres applications sont prévus.

8. Système selon l'une des revendications précédentes, **caractérisé en ce qu'**il est prévu des moyens pour établir et imprimer des inscriptions de câbles, de répartiteurs et d'éléments de réseau.
